# EUROPEAN PATENT APPLICATION

(11) **EP 1 936 495 A1**
(43) Date of publication of application: **25.06.2008**
(21) Application number: 06126088.1
(22) Date of filing: 14.12.2006
(51) Int. Cl.: G06F 9/44

(54) **A system to record, store, retrieve and replay a series of actions in a graphical user interface (a so-called full live action)**

(71) Applicant: Quadrat, 2640 Mortsel (BE)
(72) Inventor: De Paepe, Nadia, 2640, Mortsel (BE); Van Looveren, Mattias, 2640, Mortsel (BE)
(74) Representative: Verbrugghe, Anne Marie L.

(57) **Abstract**

A system to record, store, retrieve and replay a series of actions in a Graphical User Interface (a so-called Full Live Action).

A help system for an information system such as a radiology information system, to record a Full Live Action (a series of actions in a Graphical User Interface), to store and retrieve this Full Live Action, and to replay a retrieved Full Live Action.

## Description

### FIELD OF THE INVENTION

The present invention relates to a help system for an information system for recording, storing and replaying a series of actions in a user interface.

### BACKGROUND OF THE INVENTION

### References :

In the state of the art a help system exists, wherein a successive series of manual (mouse) actions in a Graphical User Interface can be executed.

An example of such a help system is found in the on-line Help System of the Eclipse Integrated Development Environment for Java programming language.

This on-line help can be accessed through following link : http://help.eclipse.org/help32/topic/org.eclipse.platform.doc.isv/gu ide/ua help.htm .

### Description of the background :

- About Eclipse.
   An IDE is an Integrated Development Environment for software developers, which not only provides a programming language suite, but also tools for a.o. debugging, packaging, version control and documentation of the software.
   For the Java programming language, one of the most advanced and powerful IDE's is the open-source Eclipse platform, which is an extensible platform that can be used for building customized IDE's, which for example enables the developer to work with separate, but correlating software projects, and which a.o. provides a highly customizable help system.
   In fact, the Eclipse Help System provides the means to set up a documentation structure to the developer's software platform, with a great level of freedom in structuring or granularity.
- General description of the Eclipse Help System.

### 1. Features

- The Help modes are Workbench, Standalone and Infocenter. Workbench is the default mode, used to serve help integrated with the product via the Help menu, including context help and help view; Standalone is used for non-Eclipse based products (less integrated); Infocenter is used for help over the web (internet or intranet).
- Rich Client Platform (RCP) is supported, so help can be provided in an RCP application.
- User customization is provided through a set of preferences.
- Pre-indexing of help content is possible : in order to avoid delay at initial search invokation, the index of the help content files can be pre-built.

### 2. Implementation

**The raw building blocks.**

The Eclipse Help System is provided as a help plug-in.

The developer creates his own help plug-ins, using the so-called extension-point of the Eclipse Help System, and TOC-files (TOC = Table Of Contents).

The raw documentation is supplied in the form of HTML files [HTML = HyperText Markup Language, is a language in which web pages are created].

The user's help plug-in is realized by creating one or more TOC-files, which refer to the raw help data in the HTML files, and pull them together in a Master TOC-file, which extends from the Eclipse help extension point (org.eclipse.help.toc).

The TOC-files are created in XML [XML = extensible Markup Language, which is used to structure data and transfer it between different information systems, in particular via the Internet].

### Extension points.

At its base level, Eclipse provides a platform with the services necessary for integrating software development tools. These services are implemented as Eclipse plug-ins. The Eclipse platform is designed so that, except for a small runtime kernel, everything in Eclipse is implemented as a plug-in or a set of related plug-ins.

A plug-in is the smallest extensible unit in Eclipse. Eclipse is composed of a number of these units, of which some are already mutually connected.

In Eclipse, these unique boundaries between plug-ins are referred to as extension points. An extension point is to be considered as a mechanism whereby a new plug-in adds functionality to an existing plug-in or uses functionality thereof. As a result, extension points are contribution mechanisms to introduce new capabilities into the Eclipse platform.

For the built-in Help plug-ins in particular, the Eclipse Help extension point is org.eclipse.help.toc, where the Eclipse Help System can easily be extended by a user-defined help plug-in, containing user documentation.

### Tables of contents.

A help plug-in is created by :
- providing the help documentation in raw format, using HTML files;
- creating TOC-files that refer to this raw documentation;
- joining the different TOC-files into a Master TOC (toc.xml);
- contributing the Master TOC to the plug-in.

A TOC-file is an XML file, which defines the key entry points into the HTML content files, by mapping a topic label to a reference in one of the HTML files.

The Master TOC contributes the different TOC-files, using a link attribute to refer to the existing TOC-files. The Master TOC is then contributed itself to the plugin (plugin.xml), using a primary attribute, to make sure that the Master TOC always appears in the topic list of the Help System.

### Active help.

Active help is the ability to invoke Eclipse code from on-line documentation, it is implemented by including JavaScript in the documentation.

### Context-sensitive help.

A focused set of help topics that is related to the current context can be shown to users on demand, using context-sensitive help, which is delivered to users when a platform-specific trigger is activated. For Windows applications, this platform-specific trigger is the F1 key.

Context-sensitive help can be associated with so-called widgets statically or dynamically.

Widgets are items that can be activated in the user interface (e.g. Control, Menu, MenuItem).

Context-sensitive help is associated statically, using context IDs; it is associated dynamically, using context providers.
- Active Help => a close-up view.
   Since this embodiment of the invention is based on the Eclipse Active Help tool, it is hereby described a little more deeply.

### Writing an active help action :

To write an active help action, the built-in interface ILiveHelpAction is used, of which two methods must be implemented : setInitializationString (to initialize the action) and run (called to run the action).

### Invoking the action from HTML :

To include active help links in the help documentation, the use of the supporting JavaScript code must be declared (located in the org.eclipse.help plug-in);
then it can be refered to, using the cross plug-in referencing technique, provided by the Help System.

The problem with these features in the prior art, is that the active help links stand alone, and that the user has limited help capabilities at his disposal.

### SUMMARY OF THE INVENTION

The problem of the prior art is solved by a system according to claim 1 :
a help system for an information system,
   - comprising a means to record a successive series of actions in a user interface into one compound action,
   - means to play the recorded compound action,
   - a means to store and retrieve the compound action,
   - and a means to replay a retrieved compound action.
      Specific embodiments are set out in the dependent claims.

### BRIEF DESCRIPTION OF THE DRAWINGS

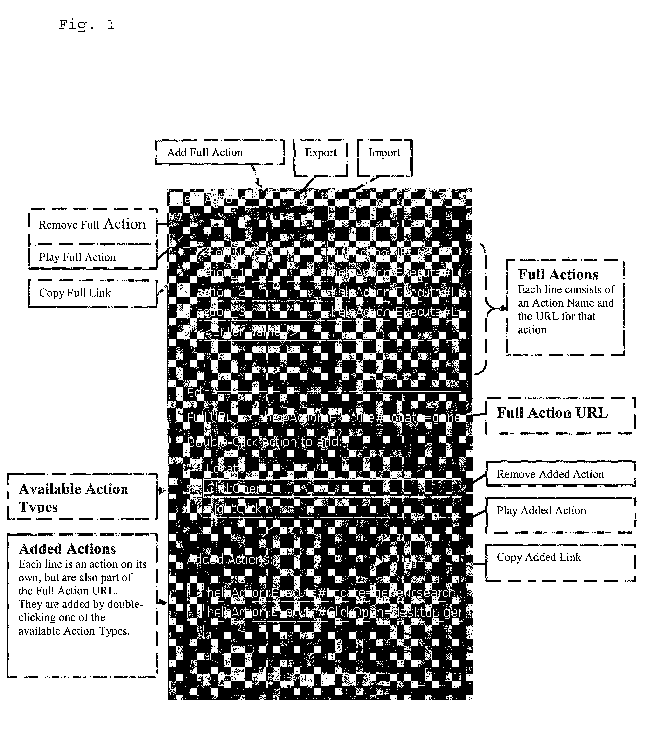

Fig. 1 shows the Graphical User Interface, in which the user can record, store and replay a sequence of help actions.

### DETAILED DESCRIPTION OF THE INVENTION

### 1. Creating, storing and (re)playing Full Actions.

- Creating Full Actions is done with the Add Full Action button on top, by which a new entry is created in the "Full Actions" list in the upper part of the screen, where a name for the newly created Full Action must be filled in underneath "Action Name".
- Adding a component (= single action) to the Full Action is done by double-clicking on one of the Available Action Types, in the middle of the screen, which adds the action to the current Full Action AND to the "Added Actions" list, in the lower part of the screen.
- Removing an Added Action is done by selecting the action from the "Added Actions" list in the lower part of the screen, and by pushing the Remove Added Action button in the lower part of the screen, above the list.
- Removing a Full Action is done by selecting the action from the "Full Actions" list in the upper part of the screen, and by pushing the Remove Full Action button on top of the screen.
- Importing saved help action files is done by choosing the wanted action name in the "Full Actions" list in the upper part of the screen, and by pressing the IMPORT button on top.
- Exporting help action files is done by selecting the previously chosen new action name, filled in underneath "Action Name", and by pressing the EXPORT button on top.
- Playing Added Actions is done by selecting the action from the "Added Actions" list in the lower part of the screen, and by pressing the Play Added Action button above the "Added Actions" list.
- Playing Full Actions is done by selecting the action from the "Full Actions" list in the upper part of the screen, and by pressing the Play Full Action button above the "Added Actions" list.

### 2. Creating a link in html : the <A> link tag, the href-attribute

In the html language, a link (hyperlink) in a document is a reference to another section of the same document, or to another document or specified section of another document, that automatically brings the referred information to the user when selected.

In the Actions Registration Engine of the Help System according to the present invention, which is a plug-in on the Eclipse Help System itself, Live Help Actions are plugged-in; they are invoked by including said links in the html content files (= Live Help Action links).

In the described specific embodiment, the invention is based upon the extension of Eclipse's Active Help.

The link to a Live Help Action is built with specific components (see further) .

**The <A> html link tag :**
In the html content pages of the Help System according to the present invention, links to other (help-) pages are used, by setting the <A> link tag with the href attribute. This href attribute can be of the following formats :
- Relative path : (should NOT start with '/')
   e.g. : if current page is *html*/*references*/*page.html,* then
   *<a href* = *"maintopic.html">* resolves to *html*/*references*/*maintopic.html,*
   *<a href* = *"docs*/*maintopic.html"> resolves to html*/*references*/*docs*/*maintopic.html,*
   *<a* href = *"..*/*maintopic.html"> resolves to html*/*maintopic.html.*
- URL (uniform resource locator) :
   Can have the following formats :
      - other URLs (such as http, file, jar:file, ...)
      - "helpAction:actionId#initializationString" (see further for Live Action Links)

### 3. The Actions Registration Engine

### Introduction

In addition to Eclipse Active Help, by which an action can be created and invoked, an Actions Registration Engine is developed, which implements three technical steps to create a help movie :
- record : a sequence of actions is created;
- store : the actions sequence is stored into a memory, as a referable link;
- replay : the stored link is invoked, causing the actions sequence to be executed again.

This feature can be used for teaching or demonstration purposes (teach me - show me); eventually, a tutorial library can be built with the list of stored sequence links. By invoking these links, a pupil can learn how to execute certain procedures that were prerecorded by a teacher or tutor.

Certain procedures that previously were executed manually, are robotized by the invented engine. This feature is not limited to teaching purposes (help procedures), but can also be applied for automatic execution of a predefined series of actions with one single action.

### Live help links ⇒ teach me - show me

The Help System offers the possibility to plug-in Live Help Actions, which can be executed by including a link in the html.

This link is human-readable and can be pasted in standard html, so no coding is necessary to create it, which is useful when implementing in a Graphical User Interface, as described in the dependent claims 2 till 5.

The link [helpAction:actionId#initializationString] comprises following components, as described in claim 6 :
- helpAction : the scheme (stays unchanged) ⇒ defines link as being a Live Help Action;
- actionId : type of action (see available action types below);
- initializationString : specific to the action; normally exists of the help id of the component for which the action is done.
   The component on which the action is performed must be in the context of the application AND must be a visual component !

### Available action types

The available action types typically are mouse actions. The invention however is not limited to one type of user interventions, nor to a single operating system like Windows; so other user interventions may apply to define the actions that can be recorded, stored and replayed by the Actions Registration Engine, and these user interventions can also be defined in a different operating system with a different user interface.
- Single actions :

### Locate

• actionId : Locate;
• what it does : locates a give component by moving the mouse cursor to it;
• initializationString : help id of the component to which to move;
• example link :
   <a href="helpAction:Locate#workspace.genericsearch"></a>.

### ClickOpen

• actionId : ClickOpen;
• what it does : opens or clicks on a given component;
• initializationString : help id of the component to click;
• example link :
   <a href="helpAction:ClickOpen#workspace.genericsearch"></a>.

### RightClick

• actionId : RightClick;
• what it does : right-clicks on a given component (useful for popups, ...);
• initializationString : help id of the component to click;
• example link :
   <a href="helpAction:RightClick#workspace.genericsearch"></a>

- Combining multiple actions :
   This is the core of the invention : it enables to combine a sequence of different single actions into one combining action : the Execute action.

### Execute

• actionId : Execute;
• what it does : calls the above helpActions based on the initializationString;
• initializationString : action id = help id pairs (e.g. Locate=workspace.genericsearch) separated by semi-colons.
• example link : all the above example links can be played in order by creating this link :
   <a href="helpAction:Execute#Locate=workspace.genericsearch;ClickO pen=workspace.genericsearch;RightClick=workspace.genericsearch">< /a>.

This will move the mouse to the component, click it and then rightclick it.

### Full action url's

The content of the href attribute in an Execute action type, is called a full action url : it combines several single actions, separated by a semicolon.

In the example above, under Execute - example link, the full action url is :
"helpAction:Execute#Locate=workspace.genericsearch;ClickOpen=work space.genericsearch; RightClick=workspace.genericsearch".

### Importing / exporting

In the description above, one can learn how to create a sequence of actions, in the form of a Live Actions Link : this describes how the recording of a sequence of actions is technically implemented.

A secondary implementation stores and retrieves the created Live Action Links with an import/export command.

To store the created Live Action Links, another implementation is realized, using an export command.

The Live Action Link (= created sequence of actions) is saved in an Action property file on a predefined memory location [this location could also be made customizable], as described in claim 7, using the export command to be invoked through the Graphical User Interface, as described in claims 8.

To replay the Live Action Link, first it is retrieved from said predefined memory location, using the import command to be invoked through the G.U.I., as also described in claim 8. finally, the retrieved Live Action Link is re-executed, using a PLAY button in the G.U.I., causing the stored sequence of actions to be replayed.

### User Interface

The underlaying Actions Registration Engine can use any operating system to implement the Graphical User Interface which a user can apply to record, play, export, import and replay said Full Live Actions.

### Healthcare

The invention is specifically applicable in a Healthcare environment, wherein the Graphical User Interface can be part of a Hospital Information System, for instance.

### 3. Example of a practical application : Help Action Panel (fig.1)

The following description shows how the user can apply the Graphical User Interface of the Help System to record, store and replay a sequence of help actions, through a Help Action Panel. However, the application of the invention is not limited to help actions; any set of action in a user interface can be recorded and replayed, using an adapted application of the invention.

### Create, add, remove Live Help Action Links

- creating / adding actions
   - Press the "Add Full Action" button to add a new entry in the "Full Actions" list.
   - Select «Enter Name» and give the action a name, which will be used to identify the action for import / export.
   - To add a component (= single action) to the Full Action, double-click one of the "Available Action Types"; move the mouse cursor to the desired action to highlight it, and left-click it.
   - The selected action is then added to the "Added Actions" AND to the "Full Action URL".
- removing actions
   • To remove an "Added Action" or a "Full Action", select it and push the REMOVE button.

### Import and export saved help action files

- Import
   - Press the IMPORT button to import an Action properties file (can be any name).
   - This will overwrite all currently loaded Actions !
- Export
   • Press the EXPORT button to export the currently loaded Actions to a properties file, with a name of your choice. This file will include all URL's and Action names.

### Play added or full actions (new or imported)

• Select the "Added Action" or the "Full Action" and press the corresponding PLAY button.
• Playing an "Added Action" or new "Full Action" is for testing purposes, playing an imported "Full Action" is to replay a previously recorded "Full Action".

## Claims

1. A help system for an information system, comprising a means to record a successive series of actions in a user interface into one compound action, means to play the recorded compound action, a means to store and retrieve the compound action, and a means to replay a retrieved compound action.

2. A system according to claim 1, wherein the actions in a user interface are mouse actions, like clicks and movements.

3. A system according to claim 1, wherein the user interface is a Graphical User Interface.

4. A system according to claim 1, comprising means in the Graphical User Interface to create, alter and remove the Full Live Action.

5. A system according to claim 1, comprising means in the Graphical User Interface to invoke the play/replay function.

6. A system according to claim 1, wherein said means to record a Full Live Action is a html-link, the latter is built up as a string in the following, non-limiting form : "helpAction:actionId#initializationString", which comprises following components :
- helpAction, to determine the scheme that is used to define the Full Live Action,
- actionId="Execute", to determine that the type of action is a combination of a series of single actions (to be determined by other actionId's for single actions),
- initializationString, to determine the component on which the action must be executed.

7. A system according to claim 6, wherein said means to store and retrieve the Full Live Action, is implemented as a means to store and retrieve the said html-link, by using a file containing properties of this link, further comprising a computer memory to store this property file into.

8. A system according to claim 7, comprising a means in the Graphical User Interface to import and export the said file, thus invoking the store/retrieve function for the Full Live Action.

9. A system according to any of the previous claims, wherein said help system is used in a healthcare environment.
